# EUROPEAN PATENT SPECIFICATION

(11) **EP 2 164 341 B1**
(45) Date of publication and mention of the grant of the patent: **14.10.2015**
(21) Application number: 08759549.2
(22) Date of filing: 13.05.2008
(51) Int. Cl.: A23G 9/28, A23P 1/10

(54) **PROCESS AND APPARATUS FOR PRODUCING SHAPED FROZEN CONFECTIONS**
VERFAHREN UND VORRICHTUNG ZUR HERSTELLUNG VON GEFORMTEN, GEFRORENEN SÜSSWAREN
PROCÉDÉ ET APPAREIL DE PRODUCTION DE CONFISERIES GLACÉES MISES EN FORME

(30) Priority: 04.07.2007 EP 07111710; 04.07.2007 EP 07111709
(43) Date of publication of application: 24.03.2010
(73) Proprietor: Unilever PLC, London EC4Y 0DY (GB); Unilever N.V., 3013 AL Rotterdam (NL)
(72) Inventor: DOEHREN, Paul, Michael, Bedford Bedfordshire MK44 1LQ (GB)
(74) Representative: Warner, Guy Jonathan
(86) International application number: PCT/EP2008/055847
(87) International publication number: WO 2009/003751

(56) References cited:
- EP-A- 0 040 989
- WO-A-00/78159

## Description

### Technical field of the invention

The present invention relates to a process and apparatus for producing frozen confectionery products that are shaped in three dimensions. In particular, it relates to an extrusion process.

### Background to the invention

There is a demand for frozen confectionery products with interesting and distinctive shapes. Products that are shaped in two dimensions have been known for many years. They are usually produced by an "extrude and cut" process, in which partially frozen ice cream is extruded though a nozzle and cut by a wire into portions of uniform thickness. The two dimensional shape arises from the shape of the nozzle, but there is no possibility of shaping in the third dimension using this process.

Three-dimensional shaped products can be produced by moulding. However, moulding processes have drawbacks, in particular the tendency of the ice cream to stick to the mould. US 4 413 461 discloses a method of shaping ice cream. The problem of ice cream sticking to the mould is solved by blowing air between the mould and the ice cream or by use of a release film between the mould and the ice cream. EP-A-0827696 discloses a method for moulding three dimensional food products in which the mould is at a very low temperature, thereby reducing the adhesion between the product and the mould. However, both of these solutions add cost and complexity to the process. Therefore there remains a need for a simple method of producing frozen confectionery products that are shaped in three dimensions.

### Brief description of the invention

We have developed a simple process for making frozen confectionery products that are shaped in three dimensions, based on the extrude and cut process. Accordingly, in a first aspect the present invention provides a process for shaping a frozen confectionery product, the process comprising:
- extruding a frozen confection from a filling means into a cavity defined by a mould block and a base;
- moving the mould block relative to the base; and
- removing the frozen confection from the cavity
characterized in that the cross-section of the base, when viewed along the direction of relative motion of the cavity and the cutting means, is not a straight line.

Products obtained and obtainable by the process of the invention are also provided.

In a second aspect the present invention provides an apparatus for shaping a frozen confectionery product, the apparatus comprising:
- a mould block and a base which define a cavity,
- a filling means for filling the cavity with frozen confection;
- means for moving the mould block relative to the base;
- means for removing the frozen confection from the cavity;
characterized in that the cross-section of the base, when viewed along the direction of relative motion of the cavity and the cutting means, is not a straight line.

WO-A 99/65325 discloses a process in which frozen confection pieces are produced by extruding a frozen confection from a filling means into a cavity defined by a mould block and a base, and then moving the mould block relative to the base, thereby opening the cavity so that the frozen confection piece can be removed. In this case, the base is a flat plate, i.e. the cross-section of the base, when viewed along the direction of relative motion of the cavity and the cutting means, is a straight line. However, this document addresses the unrelated problem of producing extruded products that contain large amounts of inclusions, and makes no mention of the possibility of producing products that are shaped in three dimensions.

In the present invention, the base of the cavity is not a plane, so the corresponding surface of the frozen confection piece is not planar either. Thus the process of the invention allows frozen confections that are shaped in three dimensions to be formed. The base and corresponding section of the mould block must have translational symmetry along the direction of relative motion of the mould block and base (i.e. the base has a constant cross-section when viewed along this direction). Thus shapes such as a half cylinder can be produced by the process of the invention, but not, for example, a hemisphere.

The frozen confection which is filled into the cavity is of a consistency such that it can be extruded from the nozzle and filled into the cavity, but which is solid enough that it retains its shape on removal from the cavity. The frozen confection is preferably partially frozen ice cream, typically at a temperature of about -5 to -15°C, most preferably from -9 to -12°C.

Preferably the base is concave and the corresponding section of the mould block is convex, when viewed along the direction of relative motion of the base and the mould block, so that the shaped surface of the frozen confection is convex.

Preferably a plurality of cavities is located in a rotating carousel and the thickness of the carousel varies radially across the cavity, thereby providing the shape of the mould block and cavity, and hence the shaped product.

Optionally, the filling means and the opening of the cavity opposite to the base through which the frozen confection is filled into the cavity also has a cross-section which is not a straight line when viewed along the direction of relative motion of the mould block and the base. This enables the other side of the product to be shaped in an analogous manner.

### Detailed description of the invention

The present invention will be further by reference to the figures wherein:
Figure 1 shows the conventional extrude and cut process.
Figure 2 is a cross-sectional view of a mould block and corresponding base according to the invention.
Figure 3 shows a top view of the cavity of Figure 2.
Figure 4 shows a side view of the nozzle and cavity at different stages through the process of the invention.
Figure 5 shows a preferred embodiment where the cavities are located in a rotating carousel.
Figure 6 compares a product shaped by the conventional extrude and cut process with a shaped product produced according to the present invention.

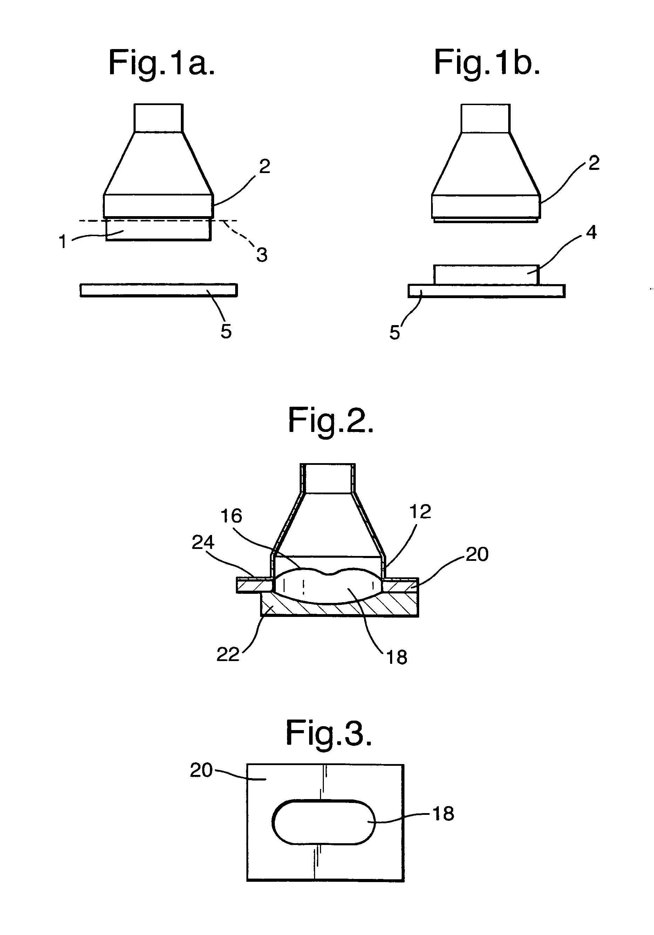

Figures 1(a) and (b) are schematic diagrams showing the conventional "extrude and cut" process. Extrude and cut-type processes for producing frozen confection products are well-known in the field of frozen confectionery manufacture and are described in, for example, "The Science of Ice Cream", C. Clarke, Royal Society of Chemistry, Cambridge, UK, 2004, p 93-94. Frozen confections (which include ice cream, water ice, frozen yoghurt and the like) are made by freezing and optionally aerating a pasteurised mix of ingredients such as water, fat, sweetener, protein (normally milk proteins), and optionally other ingredients such as emulsifiers, stabilisers, colours and flavours. The frozen confection **1** can then be formed into products by extrusion through a nozzle **2.** The frozen confection **1** is cut into pieces **4** by the cutter **3.** The extruded and cut frozen confection pieces **4** drop onto a conveyor **5,** which transports them through a hardening tunnel.

Figure 2 is a cross-sectional view of a filling means and cavity according to the invention, viewed along the direction of relative motion of the mould block and base. The frozen confection is extruded through a nozzle **12** into the cavity **18** formed by a mould block **20** and a base **22.** The nozzle end has a flange **24** which surrounds and seals the cavity as it is filled with the frozen confection, so that the frozen confection cannot flow out of the cavity. The base is not be flat, but is shaped in cross-section. In the embodiment shown the base is concave, though any suitable shape may be used. Once the cavity has been filled, the mould block is moved relative to the base in a direction perpendicular to the paper.

Figure 3 is a top view of the cavity **18** in the mould block **20** shown in Figure 2. A cavity having straight sides and rounded ends when viewed from above is shown. However any suitable shape may be chosen, for example circular, oval, star-shaped, or even the shape of an animal, cartoon character, face, hand, foot etc.. These sorts of 2D shaped products have been produced for many years by the conventional extrude and cut process, using a nozzle with the appropriate cross-section.

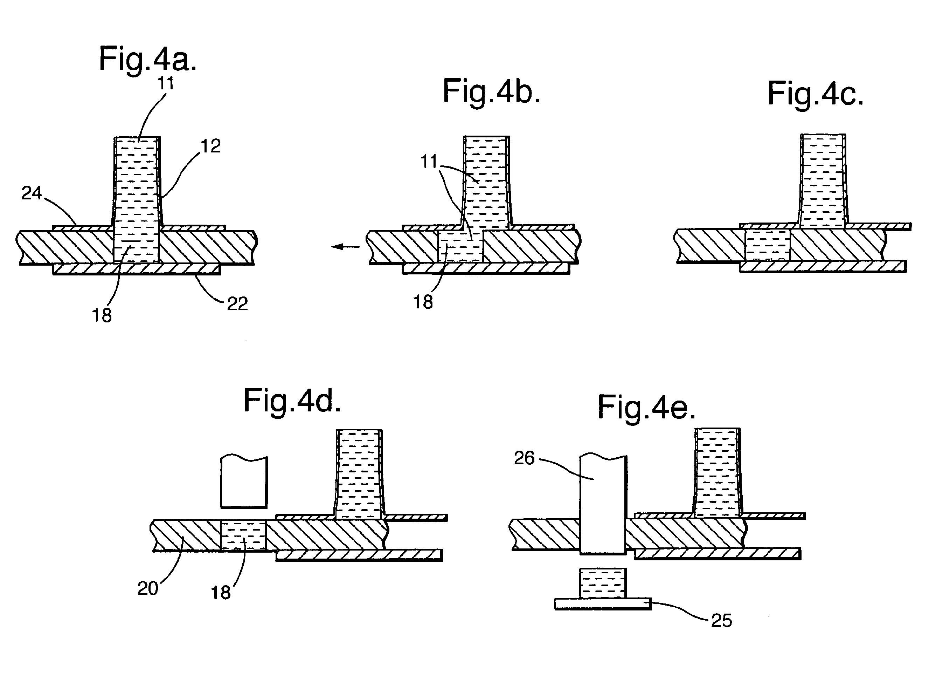

Figure 4 shows side views of the nozzle and cavity through the process according to the invention. In this view, the shaped cross-sections of the of the mould block and base are not visible. In figure 4(a) the nozzle **12** and cavity **18** are aligned while the cavity is filled. The flange **24** prevents leakage of the frozen confection from the cavity during filling. Once the cavity is filled with frozen confection **11,** the mould block **20** is moved relative to the base **22** as shown in figures 4(b) and (c). The base **22** is fixed relative to the nozzle so that the bottom of the cavity **18** is opened when the mould block **20** is moved whilst preserving the corresponding shaped side of the frozen confection piece (Figure **4**(d)). This allows the shaped frozen confection to be removed (Figure 4(e)) by applying a downward force e.g. by blowing with air, or gently pushing the frozen confection with a plunger **26** from above through the opening at the top of the cavity. Figure 4 shows an embodiment wherein the nozzle end is in close proximity to the opening of the cavity, so that the relative movement between the nozzle end and the cavity shears the frozen confection and thereby cuts the flow of frozen confection, in a manner similar to that of the cutting wire in the conventional extrude and cut process shown in Figure 1. The nozzle end may also have a cross-section which, when viewed along the direction of relative motion of the mould block and the base means, is not a straight line. This enables the other side of the product to be shaped by an analogous process. When the shaped frozen confection is removed from the cavity, it may land on a plate **25,** which should be shaped to correspond to the bottom of the frozen confection, so that the shape of the bottom of the frozen confection is not altered. Alternatively, the frozen confection may be ejected in to a bath of a cryogenic fluid (such as liquid nitrogen) in order to harden the frozen confection, so that it may subsequently be handled without losing its shape. Once removed, the confections may be taken for further processing, for example hardening, coating in chocolate and packaging.

In the embodiment shown in Figures 2-4, the frozen confection is extruded vertically downwards; however this is not essential. The frozen confection could, for example, be extruded horizontally.

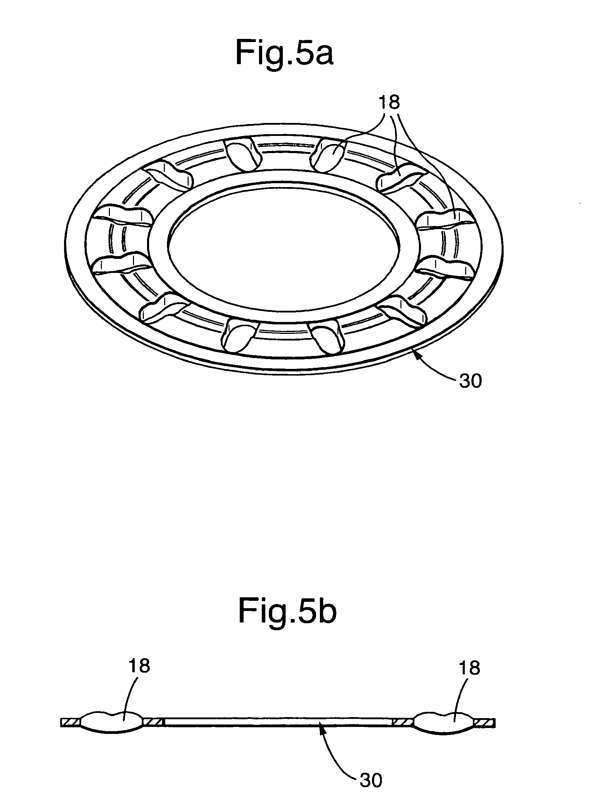

Figures 5(a) (perspective view) and 5(b) (side view) show a preferred embodiment where the mould block in which the cavities **18** are located is a rotating carousel **30.** The nozzle is located at a filling station (not shown); the rotation of the carousel is indexed so that each cavity in turn is placed beneath the nozzle at the filling station. Once the cavity has been filled, the carousel rotates to the next index point, bringing the next cavity into position at the filling station. Further round the carousel is a removing station (also not shown) where the frozen confections are removed from the cavity, for example by the method shown in Figure 4(d) and (e). Figure 5(b) shows a side view of the carousel **30.** The cross-sectional shape of the cavity **18** is achieved by varying the thickness of the carousel mould block radially across the cavity.

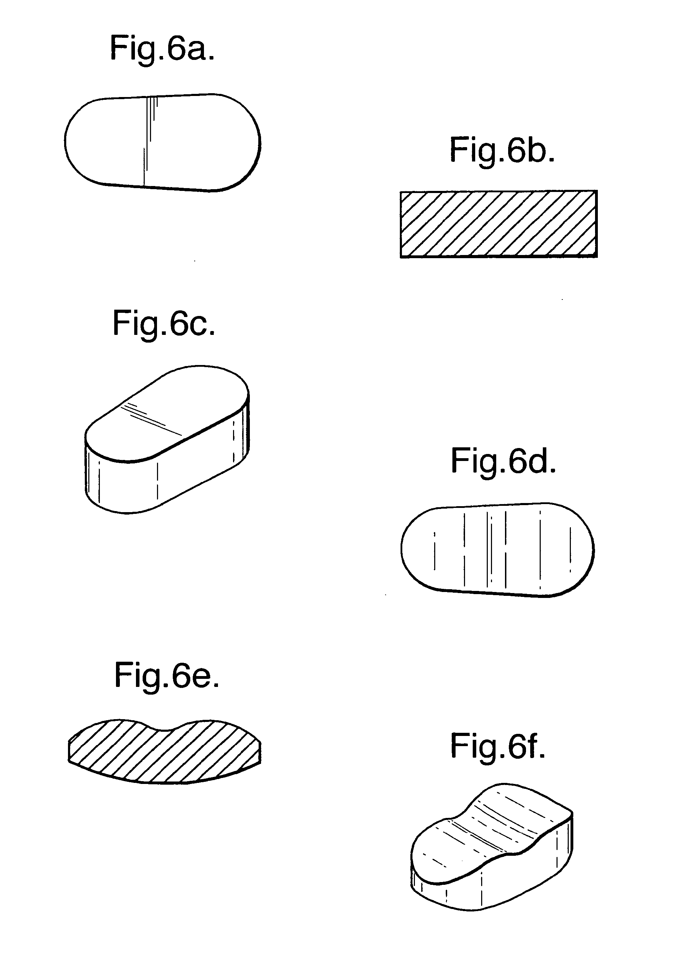

Figures 6 compares a product shaped by the conventional extrude and cut process ((a) - (c)) with a shaped product produced according to the present invention ((d) - (f)). Both products are shaped when viewed from above (Figures 6(a) and 6(d)). The side views show that the conventional product has a rectangular cross-section (Figure 6(b)), whereas the product produced according to the present invention has a shaped cross-section (Figure 6(e)). The perspective views (Figures 6(c) and 6(f)) show the three-dimensional shapes of the products.

## Claims

1. A process for shaping a frozen confectionery product, the process comprising:
• extruding a frozen confection from a filling means into a cavity defined by a mould block and a base;
• moving the mould block relative to the base; and
• removing the frozen confection from the cavity
**characterized in that** the cross-section of the base, when viewed along the direction of relative motion of the cavity and the cutting means, is not a straight line.

2. A process according to claim 1 wherein the base is concave and the corresponding section of the mould block is convex when viewed along the direction of relative motion of the nozzle and the cavity, so that the shaped surface of the frozen confection is convex.

3. A process according to claim 1 or claim 2 wherein the filling means also has a cross-section which is not a straight line when viewed along the direction of relative motion of the mould block and the base,

4. A process according to any of claims 1 to 3 wherein a plurality of cavities is located in a rotating carousel and wherein the thickness of the carousel varies radially across the cavity.

5. An apparatus for shaping a frozen confectionery product, the apparatus comprising:
• a mould block and a base which define a cavity,
• a filling means for filling the cavity with frozen confection;
• means for moving the mould block relative to the base;
• means for removing the frozen confection from the cavity;
**characterized in that** the cross-section of the base, when viewed along the direction of relative motion of the cavity and the cutting means, is not a straight line.

## Patentansprüche

1. Verfahren zum Formen eines gefrorenen Konfektprodukts, wobei das Verfahren umfasst:
- Extrudieren eines gefrorenen Konfekts aus Füllmitteln in einen Hohlraum, der durch einen Gießformblock und eine Basis definiert ist;
- Bewegen des Gießformblocks in Bezug auf die Basis; und
- Entfernen des gefrorenen Konfekts aus dem Hohlraum
**dadurch gekennzeichnet, dass** der Querschnitt der Basis in Richtung einer Relativbewegung des Hohlraums und der Schneidemittel nicht geradlinig ist.

2. Verfahren nach Anspruch 1, wobei die Basis konkav ist und der entsprechende Abschnitt des Gießformblocks in Richtung einer Relativbewegung der Düse und des Hohlraums konvex ist, so dass die geformte Oberfläche des gefrorenen Konfekts konvex ist.

3. Verfahren nach Anspruch 1 oder Anspruch 2, wobei die Füllmittel ebenfalls einen Querschnitt haben, der in Richtung einer Relativbewegung des Gießformblocks und der Basis nicht geradlinig ist.

4. Verfahren nach einem der Ansprüche 1 bis 3, wobei sich in einem Drehkarussell mehrere Hohlräume befinden und wobei sich die Dicke des Karussells radial über den Hohlraum ändert.

5. Vorrichtung zum Formen eines gefrorenen Konfektprodukts, wobei die Vorrichtung Folgendes umfasst:
- einen Gießformblock und eine Basis, die einen Hohlraum definieren,
- Füllmittel zum Füllen des Hohlraums mit gefrorenem Konfekt;
- Mittel zum Bewegen des Gießformblocks in Bezug auf die Basis;
- Mittel zum Entfernen des gefrorenen Konfekts aus dem Hohlraum;
**dadurch gekennzeichnet, dass** der Querschnitt der Basis in Richtung einer Relativbewegung des Hohlraums und der Schneidemittel nicht geradlinig ist.

## Revendications

1. Procédé de formage d'un produit de confiserie glacée, le procédé comprenant :
• l'extrusion d'une confiserie glacée de moyens de remplissage dans une cavité définie par un bloc de moule et une base ;
• le déplacement du bloc de moule relativement à la base ; et
• le prélèvement de la confiserie glacée de la cavité
**caractérisé en ce que** la section transversale de la base, quand elle est vue selon la direction de déplacement relatif de la cavité et des moyens de coupe, n'est pas une ligne droite.

2. Procédé selon la revendication 1, dans lequel la base est concave et la section correspondante du bloc de moule est convexe quand elle est vue selon la direction de déplacement relatif de la buse et de la cavité, de telle manière que la surface formée de la confiserie glacée est convexe.

3. Procédé selon la revendication 1 ou la revendication 2, dans lequel les moyens de remplissage ont aussi une section transversale qui n'est pas une ligne droite quand elle est vue selon la direction de déplacement relatif du bloc de moule et de la base.

4. Procédé selon l'une quelconque des revendications 1 à 3, dans lequel une pluralité de cavités est située dans un carrousel tournant et dans lequel l'épaisseur du carrousel varie radialement à travers la cavité.

5. Appareil de formage d'un produit de confiserie glacée, l'appareil comprenant :
• un bloc de moule et une base qui définissent une cavité,
• des moyens de remplissage pour remplir la cavité avec une confiserie glacée ;
• des moyens pour déplacer le bloc de moule relativement à la base ;
• des moyens pour prélever la confiserie glacée de la cavité ;
**caractérisé en ce que** la section transversale de la base, quand elle est vue selon la direction de déplacement relatif de la cavité et des moyens de coupe, n'est pas une ligne droite.
